Europäisches Patentamt

European Patent Office

Office européen des brevets

(19)

(11) Publication number: **0 377 279**
**A2**

## EUROPEAN PATENT APPLICATION

(12)

(21) Application number: **89312099.8**

(22) Date of filing: **22.11.89**

(51) Int. Cl.5: **C08F 8/00, C09J 7/00**

(30) Priority: **06.01.89 US 295661**

(43) Date of publication of application:
**11.07.90 Bulletin 90/28**

(84) Designated Contracting States:
**DE FR GB IT SE**

(71) Applicant: **MINNESOTA MINING AND MANUFACTURING COMPANY**
**3M Center, P.O. Box 33427**
**Saint Paul, MN 55133- 3427(US)**

(72) Inventor: **Levens, Dennis L. c/o Minnesota Mining and**
**Manufacturing Co. 2501 Hudson Road P.O. Box 33427**
**St. Paul Minnesota 55133-3427(US)**

(74) Representative: **Baillie, Iain Cameron et al**
**c/o Ladas & Parry Isartorplatz 5**
**D-8000 München 2(DE)**

(54) Pressure sensitive adhesive and transfer tape for splicing rubbery membranes.

(57) Adhesive transfer tape for lap-splicing EPDM roofing membranes. A presently preferred construction is an acrylate foam-like pressure-sensitive adhesive, used in conjunction with commercially available primers.

EP 0 377 279 A2

## PRESSURE SENSITIVE ADHESIVE AND TRANSFER TAPE FOR SPLICING RUBBERY MEMBRANES

Background of the Invention

This invention relates to the sealing of overlapped rubbery olefinic polymer (i.e., homopolymer, copolymer, terpolymer etc.) sheets to each other, to a novel pressure-sensitive sealing adhesive, and to a transfer tape having particular utility in lap splicing EPDM sheets.

Rubbery olefinic polymer sheet material finds widespread industrial use in applications where it is necessary to contain or exclude liquids. The most commonly used rubbers for formulating these sheets are polymers of ethylene, propylene, and diene monomers (commonly known as EPDM), butyl rubber, and blends of the two. In making rubbery sheet material, the olefinic polymers are often blended with desired fillers, coloring agents, extenders vulcanizing or crosslinking agents, antioxidants, etc. to form a "compound", which is then calendered or extruded into sheets (commonly known as "membranes"), typically on the order of 1 to 1.5 millimeters thick and 2 to 6 meters wide. These membranes are then heated to perhaps 150° C. for 2 hours to effect vulcanization.

For many of the applications in which rubbery membranes are employed, it is neccessary to overlap and splice the edges of a large number of sheets. Rubbers, which have low energy surfaces, are unreceptive to many adhesives. Accordingly the splicing procedure has heretofore typically involved the steps of cleaning the overlapped areas, applying a primer solution to each face, allowing the solvent to evaporate, applying a contact adhesive solution such as a neoprene-based contact adhesive to each face, again allowing the solvent to evaporate to leave a tacky adhesive surface, mating the contact adhesive-coated surfaces, and compacting the spliced area with a heavy steel roller. Operating in this way, it is possible to form extremely large spliced membranes which can be used to line water reservoirs, irrigation canals, sewage lagoons, industrial waste pits, and solar energy ponds; such products are popularly designated "geomembranes". The splicing process is, however, extremely labor-intensive and costly.

Another important application for spliced rubbery membranes is in the installation of flat roofs for commercial, institutional, and industrial buildings. Spliced membranes are laid over new or existing roofs and typically either fastened down (e.g., at 40-centimeter intervals) with metal battens or ballasted with round river-washed stones. When employed on a roof, extremely rigorous demands are placed on the rubbery membranes, particularly on the splices. Roof temperatures may approach the boiling point of water when exposed to the summer sun, and they may sink to -30° C. or even lower during winter. Roofs can expand and contract more than one percent during this temperature cycling, placing a demanding and difficult to meet requirement on the adhesive.

Traditional neoprene-based contact adhesives are not only labor intensive to use but are also particularly sensitive to moisture during application and to moisture accumulated beneath the roofing membrane. This moisture can vaporize and permeate even small imperfections in laps and seams, causing failures.

To eliminate some of the problems experienced with liquid contact adhesives, and to form end laps on heat-seamed EPDM membranes, some suppliers have introduced butyl rubber-based lap tapes. These tapes are applied to the lap area, bonding the EPDM membrane laps together when pressure is applied. These tapes, however, are generally found to be temperature-sensitive and have very limited service life.

U. S. Pat. No. 4,732,635 discloses an easy, rapid, and effective method of lap-splicing rubbery sheet material using a tape comprising a thermoplastic heat-sealable polyolefinic layer, applying sufficient heat and pressure to melt the interposed heat-sealable polyolefinic layer. For convenience and ease of use, however, pressure-sensitive adhesive tapes would be preferred.

U.S. Pat. No. 4,510,197 describes a water vapor-permeable, pressure-sensitive adhesive composition comprising terpolymers of butylacrylate, N-vinyl 2-pyrrolidone and acrylic acid, useful for surgical and medical bandage applications. The water permeability of this composition, which is desirable for use in bandages, makes it inherently unsuitable for roofing application.

Thus, prior to the present invention, there has existed a desire for a pressure-sensitive adhesive tape that provides high strength, water-impermeable seams, conforms to the contracting and expanding of the roof membrane due to temperature changes and provides long service life in the seaming and splicing of rubbery membranes. The applicant has now devised a pressure-sensitive adhesive transfer tape which, in conjunction with commercially available primers, meets the requirements for seaming rubbery membranes.

Summary of the Invention

2

The present invention comprises an acrylic pressure-sensitive adhesive (especially a foam-like transfer tape) for use in seaming and splicing rubbery roofing membranes such as EPDM. This transfer tape, in combination with a primer, provides a high strength, water-impermeable seam and splice of EPDM to itself, exhibits excellent performance over the exposure temperature ranges of roofing, and provides long service life.

The acrylic pressure-sensitive adhesive of the present invention comprises a crosslinked polymer of monomers comprising:

from about 83 to about 95 (preferably 86 to 93) parts of a non-tertiary alkylacrylate monomer, the alkyl groups of which have an average of 4 to 12 carbon atoms,

(2) from about 1 to about 5 (preferably 2 to 4) parts of a strongly polar nitrogen-free first copolymerizable monomer, and

(3) from about 4 to about 12 (preferably 5 to 10) parts of a strongly polar or moderately polar nitrogen-containing second copolymerizable monomer, the adhesive having an initial and aged T-peel value of at least about 5 N/cm when tested according to the methods described herein.

Crosslinking is effected by incorporating from about 0.01 to about 0.3 part of a photocrosslinking agent, and exposing the adhesive to UV light.

In a presently preferred embodiment, the adhesive contains microbubbles to permit better conformability to rough surfaces.

Unless otherwise noted herein, all percents, parts and ratios used herein are by weight.

## Detailed Description of the Invention

The acrylic terpolymer pressure-sensitive adhesive of the invention comprises an alkyl acrylate monomer, two polar copolymerizable monomers and a photocrosslinking agent. The alkyl acrylate monomer is preferably a monofunctional, unsaturated acrylate ester of non-tertiary alkyl alcohol, the molecules of which have from about 4 to 12 carbon atoms. Included within this class of monomers are, for example, isooctylacrylate, isononylacrylate, 2-ethyl-hexylacrylate, decylacrylate, dodecylacrylate, butylacrylate and hexylacrylate. Presently preferred monomers include isooctylacrylate, isononylacrylate, and butylacrylate.

Presently preferred nitrogen-free first monomers include acrylic acid and itaconic acid. Presently preferred nitrogen-containing second monomers include strongly polar monomers such as an acrylamide or substituted acrylamide, moderately polar monomers such as N-vinyl 2-pyrrolidone, N-vinyl caprolactam, N-vinyl piperidinone, and acrylonitrile, or a combination of strongly polar and moderately polar monomers. Presently preferred nitrogen-containing polar monomers include N-vinyl 2-pyrrolidone, acrylamide, and N-vinyl caprolactam.

The adhesive of the present invention must be crosslinked. Thermal crosslinkers are not suitable, however, since any residual crosslinker will continue to crosslink the adhesive when the roofing membrane is exposed to heat, resulting in loss of adhesion. Therefore, a photocrosslinking agent is preferred. Suitable photocrosslinkers include multiacrylates such as 1,6-hexanediol diacrylate (HDDA) as disclosed in U. S. Pat. No. 4,379,201. Other useful but less preferred photocrosslinking agents include any of those taught in U. S. Pat. No. 4,330,590 and 4,329,384. Each of the photocrosslinking agents is present in the range from about 0.01 to about 0.3 part. With less than 0.01 part, the adhesive composition has poor shear strength, resulting in premature failure. When more than 0.3 part is used, the adhesive becomes too stiff, with reduced adhesive strength.

The pressure-sensitive adhesive useful in the present invention is preferably photopolymerized, especially for thicker adhesive layers. In photopolymerization, a small amount of a photoinitiator such as 2,2-dimethoxy-2-phenyl acetophenone can be used. The preferred process used is disclosed in U. S. Pats. No. 4,181,752 or 4,303,485. Photopolymerization is preferably carried out in an inert atmosphere, such as nitrogen. An inert atmosphere can also be achieved by temporarily covering the photopolymerizable mixture with a plastic film that is transparent to ultraviolet radiation, and irradiating through the film in air. If the polymerizable coating is not covered during photopolymerization, the permissible oxygen content of the inert atmosphere can be increased by mixing the coating with a combustible tin compound as taught in U. S. Pat. No. 4,303,485, which also teaches such technique for making thick coatings in air.

Adhesives of the present invention can also be made with the well known solution polymerization techniques. Preferred thermal initiators include 2,2-bis-isobutyronitrile (available as VAZO from DuPont). The polymerization process is carried out again under inert atmospere.

The pressure-sensitive adhesives of the invention are particularly useful in the seaming and splicing of rubbery membranes, especially EPDM to itself. The membranes typically comprise 33 parts of a diene

3

rubber such as ethylene-propylene diene monomer, 33 parts of carbon black, 33 parts of an oil extender, and a small amount of sulfur.

Prior to seaming and splicing, the surface of the rubbery membrane must be primed. Suitable primers include blends of chlorinated polyolefins with isocyanates (e.g., Lord Corporation's TS 3320-19), blends of chlorinated polyolefinic with polyamide resin (e.g., Norton's GL-2933 polypropylene primer), or Eastman's CP-343-1. One suitable primer can be prepared from a blend of 6 parts chlorinated polyolefin (e.g., Eastman Chemical XCP-343-1), 4.5 parts polyarylpolyisocyanate (e.g., Mobay PAPI-135), 114 parts toluene, and 5 parts molecular sieves drying agent.

A copolymer of alkylacrylate monomer and the nitrogen-containing polar copolymerizable monomer alone does not adhere well enough to primed EPDM surfaces to form a high strength seam having good temperature performance. With the addition of a small amount, about 1 part, of the first polar copolymerizable monomer, a surprisingly good adhesion between the pressure-sensitive adhesive and the primed EPDM surfaces is obtained, resulting therefore in a high strength, water impermeable seam, with excellent temperature performance and long service life. With higher amounts of the first polar copolymerizable monomer present, about 5 parts or more, the adhesive tape becomes brittle, has very low elongation, low adhesive strength, and very poor aging properties.

Without wishing to be bound by theory, it is surmised that the sulfur from the EPDM migrates into the adhesive layer, crosslinking the acrylic acid portion of the terpolymer when exposed to high temperature, and weakening the bond.

For best results, a foamlike, pressure-sensitive adhesive transfer tape is preferred. A photopolymerizable monomeric blend further comprising microbubbles may be used. The microbubbles are preferably glass, as taught in aforementioned U.S. Pat. No. 4,303,485 but they may also be polymeric, e.g., of the type disclosed in U.S. Pat. No. 3,615,972. The microbubbles should have an average diameter of 10 to 200 micrometers, and comprise from about 5 to about 65 volume percent of the pressure-sensitive adhesive layer. Below 5 volume percent, the effect of the bubbles is negligible. Above 65 volume percent, the adhesive strength becomes too low because of incomplete coverage of the bubbles by adhesive. The thickness of the foamlike layer should range from at least about 0.3 mm to about 4.0 mm. At less than 0.3 mm, the shear strength is too low for seaming EPDM roofing membranes. At thicknesses above 4.0 mm, the adhesive layer is functional, but the cost becomes excessive, and the splice is aesthetically unattractive.

Because it is difficult, expensive, and time-consuming to conduct actual field evaluations of products made in accordance with the invention, a number of tests have been developed to provide information that relates directly to some aspect of roofing end use requirements. These tests are briefly described below:

## 1. T-peel test

T-peel is measured as in ASTM D-1876-72 except that the test samples consisted of two 2.54 cm wide x 15 cm long x 1.14 mm thick strips of commercially available EPDM-based membrane, primed with Lord Corporation TS-3320-19, and provided with a 38-micrometer layer of pressure-sensitive adhesive, were superposed in coextensive adhesive-to-adhesive contact, and approximately 5 cm at one end laminated with a rubber roller with hand pressure. The samples were allowed to dwell one week at room temperature, after which conventional T-peel tests ("initial") were performed in tensile testing equipment in which the jaws were separated at a rate of 5.1 cm/minute.

For roofing applications, initial values should be at least 5 N/cm (preferably at least 10 N/cm) when tested at room temperature; if the T-peel value is significantly less than this figure, seams tend to open up.

Identical T-peel samples were then aged an additional 8 weeks at 21° C and 70° C respectively and subjected to the same test. Still other identical T-peel samples were subjected to the following sequence of environmental extremes:

(1) 24 hours in an 80° C oven,

(2) 72 hours in an 80° C circulating water bath,

(3) 8 hours at -18° C,

(4) 64 hours in an 80° C circulating water bath.

This sequence was repeated 8 times for each sample, and the T-peel after aging was measured at room temperature in the same manner as before. Aged T-peel values of at least 5 N/cm, and preferably at least 10 N/cm at room temperature are also required.

## 2. Static Shear Test (or Overlap Shear Test)

4

A 2.5-cm x 5-cm strip of adhesive is interposed between two previously primed 2.5-cm x 10-cm pieces of 1.5 mm thick EPDM rubber membrane to form a composite. The two rubber sections are overlapped so that 5 cm of the rubber sheet extends from opposite ends. The composite is maintained for 24 hours at room temperature and then hung vertically in a 70° C oven, held by a clamp at the top and with a 2-kg weight attached to the bottom end. Five samples of each adhesive composition are made and tested at the same time; failure should not occur in less than 2 days, preferably not less than 15 days, and still more preferably not less than 30 days.

A similar test at 24° C with a 5-kg weight may also be carried out instead of the 70° C test with a 2-kg weight.

### 3. Dynamic Shear

Samples were prepared as for the static shear test. Opposite ends of the composite were then clamped in the upper and lower jaws of an "Instron" tensile tester and the jaws separated at a rate of 2 cm/min. An acceptable value is at least about 50 N/cm.

The following examples will further illustrate the invention, but are not to be construed as limiting the invention.

### EXAMPLE I

A mixture of 90 parts IOA (isooctylacrylate), 8 parts NVP (N-vinyl 2-pyrrolidone), 2 parts AA (acrylic acid), 0.15 part IRG (2,2-dimethoxy-2-phenyl-acetophenone, e.g., "Irgacure" 651, available from Ciba-Geigy), 0.08 part HDDA, 2 parts "Cabosil" fumed silica and 9 parts "Scotchlite" C-15 glass microbubbles (average density 0.15, diameter 10-200 micrometers) was prepared and knife coated onto a silicone-coated paper-based release liner at a thickness of 1 mm. This coating was then polymerized by exposure to ultraviolet radiation in a nitrogen atmosphere at a total energy of 600 mj. The resultant adhesive was cut into 2.5-cm wide pieces and tested according to the test methods previously described; the EPDM surface was first washed with heptane and then primed with Lord Corp. TS 3320-19. Static shear, T-peel (before and after aging), and dynamic shear test results are shown in Table 1. For comparative purposes, a neoprene contact adhesive (Ashland "Pliobond" 2368 neoprene adhesive) and a butyl-based tape (available from Olin-Rocket Research Co.), both sold for use in seaming EPDM sheets, were also tested.

Table I

| | Example I | Contact adhesive | Butyl-based Tape |
|---|---|---|---|
| Dynamic Shear, N/cm T-Peel (N/cm) | 68 | 50 | 23 |
| a). Initial--tested at | | | |
| 21° C. 70° C. | 20.6 6 | 7.4 2.1 | 8.4 3.7 |
| b.) After 8 weeks aging at room temperature and subsequent testing at | | | |
| 21° C 70° C. | 18.6 14.1 | 4.4 1.7 | 7.2 2.3 |
| c). After 8 weeks of environmental cycling and subsequent testing at | | | |
| 21° C 70° C Static Shear (70° C, 2-kg wt) | 19.2 16.7 >30 days | 4.9 1.2 c. 24 hrs. | 3.7 0.5 20 min. |

## EXAMPLES 2-12

These adhesives were made as in Example I except that different amounts of the various components were employed, as shown in Table II. These adhesives were also tested in the same way as the adhesive of Example I; results are shown in TABLE II. In each case the primer used was Lord Corp. TS 3320-19.

TABLE II

| Example | Components, Parts by Weight | | | | | | |
|---|---|---|---|---|---|---|---|
| | IOA | AA | NVP | IRG | HDDA | Fumed silica | Glass Bubbles |
| 2 | 87.5 | 1 | 11.5 | 0.15 | 0.08 | 2 | 9 |
| 3 | 87.5 | 0 | 12.5 | 0.15 | 0.08 | 2 | 9 |
| 4 | 93.7 | 2.1 | 4.2 | 0.15 | 0.08 | 2 | 9 |
| 5 | 87.5 | 2 | 10.5 | 0.20 | 0.08 | 2 | 9 |
| 6 | 93.7 | 2.1 | 4.2 | 0.15 | 0.3 | 2 | 9 |
| 7 | 84 | 1.8 | 14 | 0.16 | 0.085 | 2.1 | 9.6 |
| 8 | 90 | 3 | 6 | 0.16 | 0.08 | 2 | 9 |
| 9 | 90 | 4 | 6 | 0.15 | 0.08 | 2 | 9 |
| 10 | 90 | 2 | 8 | 0.15 | 0.08 | 2 | -- |
| 11 | 90 | 2 | 8 | 0.15 | 0.08 | -- | -- |
| 12 | 90 | 2 | 8 | 0.15 | 0.08 | 2 | 2* |

* "Expancel" 551-DE polymeric bubbles, obtained from Chemanoid Co.

TABLE III

| Example | T-peel | (N/cm) | Shear Creep, time to fail, 70° C., 2-kg wt. | Dynamic Shear, N/cm |
|---|---|---|---|---|
| | | Initial | 8 weeks aging | |
| 2 (Comp.) | 10.0 | < 1.8 | 2 hours | -- |
| 3 (Comp.) | 13.2 | < 1.8 | -- | -- |
| 4 | 13.2 | 11.2 | > 30 days | 58 |
| 5 | 20 | 18.6 | > 30 days | 61.6 |
| 6 (Comp.) | 7.2 | -- | 20 minutes | -- |
| 7 (Comp.) | 16.5 | -- | 2 hours | 38.7 |
| 8 | 19 | 18.6 | > 30 days | 67 |
| 9 | 15 | 5.6 | 2 days | 74 |
| 10 | 12.1 | -- | -- | -- |
| 11 | 10.2 | -- | -- | -- |
| 12 | 14.9 | -- | -- | -- |

## EXAMPLE 13

This adhesive was made in the same manner as Example 1 except that N,N-dimethylacrylamide was substituted for the NVP. T-peel tests were performed on this adhesive as in Example 2, with the following results:

| T-peel (N/cm) | |
|---|---|
| Initial | 18.6 |
| After 8 weeks | 17.9 |
| Shear Creep | > 30 days |
| Dynamic Shear, (N/cm) | 64.8 |

**Claims**

1. Normally tacky and pressure-sensitive adhesive for use in seaming and splicing rubbery roofing membranes, especially those made of EPDM, comprising a photocrosslinked polymer of monomers comprising:

(1) from about 83 to about 95 parts by weight of a nontertiary alkyl acrylate monomer, the alkyl groups of which have an average of 4 to 12 carbon atoms,

(2) from about 1 to about 5 parts by weight of strongly polar nitrogen-free copolymerizable monomer, and

(3) from about 4 to about 12 parts of at least moderately polar nitrogen-containing copolymerizable monomer,

and incorporating a photoinitiator and from about 0.01 to about 0.3 part of a photocrosslinking agent, the adhesive being further characterized by having initial and aged T-peel values of at least about 5 N/cm when tested against primed EPDM rubber.

2. A transfer tape comprising the adhesive of claim 1 in a layer about 0.3-4 mm thick, carried on a release liner.

3. The tape of claim 2 containing 86-93 parts nontertiary alkyl acrylate monomer, 2-4 parts strongly polar nitrogen-free copolymerizable monomer, and 5-10 parts nitrogen-containing copolymerizable monomer.

4. The tape of claim 3 wherein the nontertiary alkyl acrylate is isooctyl acrylate.

5. The tape of claim 4 wherein the nitrogen-free copolymerizable monomer is acrylic acid.

6. The tape of claim 5 wherein the nitrogen-containing copolymerizable monomer is N-vinyl 2-pyrrolidone.

7. The tape of claim 6 wherein the photocrosslinking agent is 1,6-hexanediol diacrylate.

8. The tape of claim 7 wherein 5-65 volume percent of the tape consists essentially of glass microbubbles having an average diameter of 10-200 micrometers, thereby forming a foamlike composition having a high degree of conformability.

9. A method of lap splicing EPDM roofing membranes comprising the steps of applying a primer to said membranes over the area to be spliced and interposing the transfer tape of any preceding claim between the primed surfaces.

10. The method of claim 9 wherein the primer consists essentially of a blend of chlorinated polyolefin and polyarylpolyisocyanate.